# EUROPEAN PATENT SPECIFICATION

(11) **EP 2 787 834 B1**
(45) Date of publication and mention of the grant of the patent: **28.09.2016**
(21) Application number: 12791147.7
(22) Date of filing: 19.11.2012
(51) Int. Cl.: A23L 35/00, A23G 9/32, A23G 9/50, A21D 13/00

(54) **EDIBLE COATING COMPOSITION**
ESSBARE BESCHICHTUNGSZUSAMMENSETZUNG
COMPOSITION D'ENROBAGE COMESTIBLE

(30) Priority: 09.12.2011 IN MM34772011
(43) Date of publication of application: 15.10.2014
(73) Proprietor: Unilever N.V., 3013 AL Rotterdam (NL); Unilever PLC, London, Greater London EC4Y 0DY (GB)
(72) Inventor: GHOSH DASTIDAR, Sudipta, Whitefield Bangalore 560 066 (IN); PANCHANATHAN, Anandh, Whitefield Bangalore 560 066 (IN); SHANKAR, Raviprasad, Whitefield Bangalore 560 066 (IN); TONPE, Gourinandan, Triumbak, Whitefield Bangalore 560 066 (IN)
(74) Representative: Warner, Guy Jonathan
(86) International application number: PCT/EP2012/072965
(87) International publication number: WO 2013/083392

(56) References cited:
- EP-A1- 1 582 105
- WO-A2-98/42214
- US-A- 4 223 023
- US-A1- 2008 175 957

## Description

### Field of the invention

The present invention relates to an edible coating composition, particularly to an edible coating composition for providing moisture barrier.

### Background of the invention

Food product such as biscuits, cookies, wafers, cones or any other baked dough based food product rapidly absorbs moisture post baking. The baked dough based food product generally absorb moisture either from an exposure to atmosphere or upon contact with foodstuff having relatively higher amounts of water such as ketchup, sauce, gravy and jam by topping or coating. Upon absorption of moisture they become soggy and develop unpleasant organoleptic properties such as poor texture or appearance.

Serving frozen confectionery like ice-cream in cones and cups made of wafers are well known. Cones serve for containing ice-cream and when eaten along with ice-creams their crispness provides enhanced sensorial taste.

Cones are generally a baked preparation made from a batter of a flour (such as wheat flour or refined wheat flour), sugar and other ingredients. Presence of starches from refined wheat flour, sugar anhydrides formed during high temperatures of baking and un-crystallised invert sugar makes the baked cones highly hygroscopic. Cones may absorb atmospheric moisture immediately after baking or during its storage. Contact with high moisture contacting food systems like ice-creams may also lead to absorption of moisture by the cone.

Moisture migration from ice-cream to cone depends on the amount of water and the water activity of the two components. Varying water activities (aw) and moisture content causes a state of non-equilibrium. Water activity (aw) or relative vapour pressure, is the chemical potential of water vapour at constant or equilibrium relative humidity. Water thus migrates from areas of high water activity to areas of low water activity. Therefore, migration of water from ice-cream (aw 0.97, 60 % moisture) to cone (aw 0.2 to 0.3, 2 % moisture) occurs continuously in an attempt to reach thermodynamic equilibrium.

As a result of this migration, cone tends to lose its crispness that leads to loss of desirable sensorial characteristics, decrease in shelf life and undesirable changes in texture. During the migration of the water, water soluble colours may also migrate from the ice-cream to the cone which may further affect the visual appearance of cone.

Cones may be filled with ice-cream immediately before consuming or they may be pre-packed with ice-cream and stored in a freezer. In pre-packed ice-cream cones, cone may absorb free water content of ice cream at the time of filling and also during cold storage more so when there is a large fluctuation in storage temperature. In addition any ice, snow or other condensation that deposit on outer surface of the cone during storage melts upon exposure to ambient temperatures which further contributes to a soggy cone.

Although this problem is predominantly found in ice-cream cones and wafers, it applies mutatis mutandis to any other dough based food product, notably wafers, cookies, biscuits and other common snacks. Such food products, although crispy when taken from the pack, typically get soft when exposed to air, due to moisture penetration into the food product.

Attempts at solving the problem presented by moisture migration in the art have focused on applying a hydrophobic film that further serves as an edible barrier. Some of the ways of providing a non-hygroscopic cone includes saturating the baked cone with a spray of oil immediately after baking or coating with couverture (e.g. chocolate) just prior to dispensing ice cream into cone. The problem with couverture coating is that such cones must be stored and shipped at controlled low temperature conditions. On the other hand, if a fat or a higher melting point material is used to compensate for this problem, it has been found that the eating qualities of the finished cone are adversely affected inasmuch as the high melting point fat have an unpleasant, waxy feel to the mouth. WO98/42214 (Dalgety PLC, 1998) discloses an edible composition film for use as a moisture barrier comprising a conglomerate of lipid and hydro-colloid component, said hydro-colloid may be chitosan, among a list of various hydro colloids and said edible film further possibly comprising an emulsifier, said emulsifier being possibly a C10-C22 fatty acid soap This application further discloses the use of said coating for the manufacture of baked dough products such as ice cream cones.

US2008/175957 (HORGAN MONIKA BARBARA ET AL., 2008) discloses a coating composition possibly comprising chitosan and fatty acids. This application does not disclose the incorporation of edible oil. The coating of this document does not comprise either a complex of chitosan and C10-C22 fatty acid soap.

EP1582105 (HAYASHIBARA BIOCHEM LAB, 2005) discloses a body soap comprising a mixture of chitosan and sodium laurate. However, this composition is not suitable as an edible composition. EP 1618795A1 (Shimizu Chemical Corporation, 2006) discloses an agent and a method for preventing water migration in foods. The invention discloses an agent that includes glucomannan or a source thereof admixed with a coagulating agent capable of providing a substantially water-resistant barrier. This application also discloses a method of providing water-resistant barrier in a high moisture containing system such as ice-cream that involves coating the inner surface of the cone and the surface of the ice-cream with the agent. US4223023 (Furda, I980) discloses a chitosan-fatty acid complex and its use as a food additive or as a pharmaceutical preparation to reduce the absorption of lipids. The invention discloses a chitosan-fatty acid complex having improved ability to bind with lipids. The invention teaches use of the chitosan-fatty acid complex as an ingredient of the food or pharmaceutical composition. The application however does not teach of a moisture barrier film or coating.

US2007/0166437(Bevers et al, Unilever) discloses an edible barrier for use in reducing migration of moisture and flavour in food products. This application discloses an edible barrier composition having cross-linked biopolymer and a lipid material, said edible barrier having a thickness of about 2 to 1, 500 micrometer. A chitosan-vanillin complex is disclosed for providing a barrier layer in food products.

It is thus an object of the present invention to provide an edible coating composition.

It is another object of the present invention to provide a coated food product, typically an ice-cream cone, with improved moisture barrier properties.

It is another object of the present invention to provide a coated food product that retains crispness at the time of consumption.

It is another object of the present invention to provide a coated ice-cream cone that shows improved moisture barrier during long periods of cold storage even under varying temperature conditions.

It is another object of the present invention to provide a method for manufacturing a coated ice-cream cone.

It is yet another object of the present invention to provide a coated ice-cream cone having improved shelf life period.

It is yet another object of the present invention to provide coated ice-cream cones that has good storage stability at higher storage temperatures.

It is now found that an edible coating composition having a chitosan-soap complex provides for a hydrophobic coating. It was found that when atleast one surface of the ice-cream cone includes the coating composition it improves the shelf life for which the cone retains its crispness at higher storage temperature.

### Summary of the invention

According to the first aspect, the invention provides an edible coating composition comprising 30 to 55 wt% edible oil and characterised in that it comprises 0.5 to 50wt% complex of chitosan and C₁₀-C₂₂ fatty acid soap.

According to a second aspect the invention provides an edible coating composition comprising 0.5 to 5 wt% complex of chitosan and C₁₀-C₂₂ fatty acid soap, 5 and 65 wt% of an edible coating base and 30 to 55 wt% of edible oil.

According to a third aspect, the invention provides a coated food product having a cone comprising:
a. 45 to 80 wt% wheat flour;
b. 15 to 50 wt% sugar;
c. 1 to 30 wt % edible oil;
d. 0 to 3 wt % lecithin; and,
e. 0 to 3 wt% water;
wherein atleast one surface of the cone is coated with the composition of the first aspect or second aspect; and wherein the total weight of the coated cone is 2 to 20 grams, and wherein the ratio of the weight of the cone to the weight of the coating is 1:5 to 5:1.

According to a third aspect, disclosed is a method of manufacturing a coated food product including the steps of:
a. applying to atleast one surface of the cone the coating composition of the first aspect; and,
b. drying the coating composition.

According to a fourth aspect, disclosed is a use of a coating composition of the first aspect for providing moisture barrier.

For the avoidance of doubt, by cone or ice-cream cone is meant any cone, wafer, cookie, biscuit, or other edible dough based food product or container suitable for the use of packaging food products, such as ice-cream.

The food product as disclosed in the present invention is typically a dough based, baked food product. Although the main objective is to provide an ice-cream cone, it is equally suitable in keeping other baked dough based food products, e.g. cookies, wafers, biscuits, and other baked dough based snacks crispy and preventing them from getting soft.

The terms food product and foodstuff are used interchangeably.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

According to a first aspect, disclosed is an edible coating composition having edible oil and a complex of chitosan and C₁₀-C₂₂ fatty acid soap.

The edible coating composition may be applied as such (also referred to as applied neat herein below) or in combination with an edible coating base;

### Edible coating composition

The edible coating composition comprises edible oil and a chitosan-soap complex.

### Edible oil

Disclosed edible coating composition includes 30 to 55 wt% edible oil. Preferred compositions include 32 to 55 wt% edible oil. More preferred compositions include 38 to 52 wt% edible oil. Further preferred compositions include 40 to 50 wt% edible oil, and optimal compositions include 42 to 48 wt% edible oil.

Edible oil may be selected from any of the known sources. Preferably the edible oil is a C₁₂-C₁₈ edible oil. Edible oil may be selected from the group comprising sunflower oil, coconut oil, rapeseed oil, olive oil, peanut oil or oils extracted from plant or flower material such as rose oil, and combinations thereof. Also fractionated oils are encompassed in the invention. Preferably the edible oil is palm oil or coconut oil or any other edible oils. Most preferred edible oil is coconut oil.

### Chitosan-soap complex

Disclosed edible coating composition includes 0.5 to 50 wt% of a complex of chitosan and C₁₀-C₂₂ fatty acid soap, preferably C₁₂-C₁₈ fatty acid soap, when applied neat on a substrate.

When the chitosan-soap complex is used with an edible coating base, the compositions preferably comprise 0.5 to 5 wt% of the chitosan-soap complex, more preferably 1.5 to 5 wt% , even more preferably 2 to 5 wt%, still more preferred compositions comprise 2.5 to 5 wt% of the chitosan-soap complex. Further preferred compositions comprise 3 to 5 wt% of the chitosan-soap complex. It is preferred that the chitosan-soap complex is a chitosan-laurate complex.

### Chitosan:

Chitosan is a linear polysaccharide having randomly distributed β-(1-4)-linked D-glucosamine (deacetylated unit) and N-acetyl-D-glucosamine (acetylated unit). Chitosan is a poly-cationic molecule which is insoluble in water and most organic solvents. Salts of chitosan are soluble in water.

Chitosan is also known by the following names chitosan ascorbate; deacetylated chitin, enzymatic polychitosamine hydrolysate, hep-30; n-carboxybutyl chitosan; n, o-sulfated chitosan; o-sulfated n-acetylchitosan; sulfated n-carboxymethylchitosan; sulfated o-carboxymethylchitosan.

Chitosan is made from de-acetylation of chitin, a polysaccharide found in exoskeleton of many insects, crustaceans and cell walls of various fungi. Chitosan is obtained by adjusting the ration of the D-glucosamine units to the amino groups in the polymeric chain. Conventional method of preparing chitosan includes alkaline de-acetylation of chitin with concentrated sodium hydroxide at elevated temperatures. It may also be obtained by fermentation process, de novo synthesis with isolated enzymes or synthesis by organic chemistry approaches. Depending upon the conditions of the de-acetylation, chitosan with various degrees of acetylation is obtained. In the most common products, the degree of de-acetylation is typically between 10 and 90 percent.

In the context of the present invention, the preferred degree of acetylation of chitosan is from 10 to 80 %, more preferably from 45 to 75%. The stiffness of the chitosan film is directly influenced by the content of the acetyl groups left on the chain after the synthesis process. This is so because of the higher degree of cross-linking that they cause with increasing acetylated concentration.

The solubility of chitosan depends on but is not limited to molecular weight, degree of de-acetylation, counter-ion used, and degree of neutralization of the polymer by the counter-ion.

Preferably the molecular mass of chitosan is at least 50000 u, more preferably the molecular mass is from 50000 u to 200,000 u, still more preferably from 70,000 to 150,000 u, or even from 80,000 to 100,000 u. The higher the molecular mass of the chitosan, the higher the viscosity of the solution, but the more difficult the processing. Too high chitosan molecular mass, can still be applied, when diluted, but this is generally not preferred for processing reasons and to avoid the addition of moisture to the system on dilution.

### Soap:

The composition includes soap in form of a chitosan-soap complex. Soap is a sodium or potassium salt of fatty acids. Preferred soaps include salts of C₁₀-C₂₂ fatty acids, preferably C₁₂-C₁₈ fatty acids. The most preferred soap is sodium laurate.

The composition according to the invention preferably includes plasticizer such as various polyols and sugars. Preferably the polyols includes glycerol, sorbitol, polyethylene glycol, glycerine and preferably the sugar includes sucrose.

### Edible coating base:

Various edible coating compositions with moisture resistance properties are disclosed in the art (herein after referred to as edible coating base or coating base). When used in combination with a commonly available edible coating base, the edible coating composition of the present invention typically comprises between 5 to 65 wt% of the edible coating base, 30 to 55 wt% of edible oil and 1 to 5 wt% of the chitosan-soap complex.

Preferably the edible coating base is not more than 65% by weight of the edible coating composition, more preferably 5 to 65% by weight, and effectively between 17 and 65% by weight of the edible coating composition.

A very common edible coating base is a chocolate base. Such a chocolate base typically comprises of cocoa and sugar. In the purview of the present invention the chocolate coating is the most preferred and is present in the composition in a concentration of between 5 to 65% by weight.

### Cocoa powder:

The edible coating composition preferably includes 2 to 40% by weight of cocoa powder. Preferred compositions include at least 4 %, more preferably at least 5%, still more preferably at least 7%, or even at least 9%, but preferably not more than 30%, more preferably not more than 25%, still more preferably not more than 20%, even more preferably not more than 15%, yet more preferably not more than 13%, or even not more than 11 % by weight of cocoa powder.

Cocoa powder gives the coating a chocolate aspect and taste. Cocoa powder may preferably be natural or alkalinised.

When cocoa powder is present in the composition, the chitosan-soap complex is preferably present in a concentration of between 0.5 and 5% by weight of the composition. More preferred compositions comprise 1.5 to 5 wt% still more preferably 2 to 5 wt%, still more preferred compositions include 2.5 to 5 wt% of the chitosan-soap complex. Further preferred compositions comprise 3 to 5 wt% of the chitosan-soap complex. It is preferred that the chitosan-soap complex is a chitosan-laurate complex.

### Sugar:

Disclosed edible coating composition preferably includes 15 to 60 wt% sugar more preferably 25 to 60wt% still preferably from 30 to 60 wt% sugar, further. preferred compositions include 32 to 56 wt% sugar further preferred compositions include 36 to 50 wt% sugar still further preferred compositions include 38 to 48 wt% sugar, and optimal compositions include 40 to 46 wt% sugar.

Sugars, as defined in "Diet, nutrition and the prevention of chronic diseases" - Report of a Joint WHO/FAO Expert Consultation, WHO Technical Report Series 916, WHO, 20 Geneva, 2003 includes all mono and disaccharides added by the manufacturer, cook, or consumer i.e. "free sugars", plus sugar naturally present and sourced from honey, syrups and juices. Preferred sugars or sweetening agent includes sucrose, fructose, sugar replacers such as polyols (e. g. maltitol, lactitol, isomalt, erythritol, sorbitol, mannitol, xylitol), bulking agents like polydextrose or other sweeteners like tagatose, high-intensity sweeteners like saccharin, aspartame, acesulfame-K, cyclamate, neohesperidin, rhaumathin, sucralose, alitame, neotame, natural sweeteners like Stevia and any possible combinations thereof. More preferably the sugar is sucrose or fruit sugars.

### Substrate

The substrate for the edible coating composition is typically a food product, preferably a baked food product, but packaging materials for food products are not excluded from the scope of the present invention.

### Coated food product

According to a second aspect disclosed is coated food product having a cone, wafer, cookie or biscuit that includes wheat flour, edible oil, sugar, lecithin and water.

A "coat" or a "coating" generally refers to one or more layers of coating composition applied to an exterior surface of a foodstuff. A coating typically does not extend into the whole foodstuff, but instead resides relatively close to the surface of the foodstuff. When the foodstuff is relatively thin the coating can extend throughout the foodstuff. Coating may be applied to a portion or to entire exterior surface of the foodstuff.

### Baked dough based food product

Although the invention is predominantly focussed on ice-cream cones and wafers, it may be applied to any baked dough based food products, such as cookies, wafers, biscuits and other baked dough based snacks.
The product may be coated with the composition of the invention over its entire surface, or part of the surface. The invention is especially useful for coating ice-cream cones.

### Ice cream cone

In one preferred embodiment of the invention, the coated food product is an ice-cream cone. The cone typically includes an inner surface and an outer surface. Inner surface of the cone is coated with the coating composition according to the present invention. The cone is made from a semi fluid batter having wheat flour or refined wheat flour, sugar, edible oil, lecithin and water. Cones may be made by any of the methods known in the art.

Alternatively, the baked dough food product may be in the form of a stick for holding the ice-cream. If applied to such a lolly (also referred to in the art as ice lolly, lolly ice, ice lollypop, or popsicle), it is the outer surface that is coated with the edible coating composition of the invention.

One of the known methods of preparing a cone is by a molding process. This process includes the steps of depositing a semi-fluid batter having the desired ingredients such as wheat flour or refined wheat flour, sugar, edible oil, lecithin and water into a mold; inserting a core into the mold such that the semi-fluid batter is forced to assume the shape of the cavity provided between the core and the mold; removing the core when the core of the mold is joined with the batter; subjecting the mold to heat for an appropriate length of time and discharging the cones from the mold at the completion of the specified time. Prepared cones are preferably discharged onto a conveyor for trimming and for packing. By this method cones of various shapes including but not limited to conical shape or cups of various sizes and configurations may be made.

Another known method of preparing an ice-cream cone is by a rolling process. This process includes the steps of depositing the batter between two plates; baking a flat wafer between the plates; transferring the flat wafer sheet to a rolling device; rolling the flat waffle into a conical shape. Ice-cream cones made by this process are called sugar roll cone.

Preferably the ratio of the weight of cone to the coating is 1:5 to 5:1 more preferably from 1:4 to 5:1 and further preferably from 1:1 to 5:1 and still more preferably from 1:1 to 4:1.

Preferably the weight of coated ice-cream cone is from 2 to 20 grams, more preferably 4 to 12 grams and most preferably from 5 to 10 grams.

### Wheat flour

Preferably the cone includes 45 to 80 wt% wheat flour. Preferred compositions include 48 to 80 wt% wheat flour. More preferred compositions include 50 to 75 wt% wheat flour. Further preferred compositions include 55 to 70 wt% wheat flour, and optimal compositions include 58 to 65 wt% wheat flour.

### Sugar

Preferably the cone includes 15 to 50% by weight of sugar. Preferred compositions include at least 17 %, more preferably at least 19%, still more preferably at least 21 %, or even at least 25%, but preferably not more than 45%, more preferably not more than 40%, still more preferably not more than 35%, even more preferably not more than 30% by weight of sugar.

### Edible oil

Preferably the cone includes 1 to 30 wt% edible oil. Preferred compositions include 1 to 15 wt% edible oil. More preferred compositions include 1 to 8 wt% oil. Further preferred compositions include 1.5 to 6 wt% oil. Still further preferred composition include 2 to 5.5 wt% of edible oil, and optimal compositions include 2.5 to 4.5 wt% edible oil.
Edible oil may be selected from any of the known sources. Preferably the edible oil is a C₁₂-C₁₈ edible oil. Preferably the edible oil is palm oil or coconut oil.

### Lecithin

Preferably the cone includes 0 to 3 wt% lecithin. Preferred compositions include 0.1 to 2 wt% lecithin. More preferred compositions include 0.2 to 0.8 wt% lecithin. Further preferred compositions include 0.3 to 0.7 wt% lecithin. Still further preferred compositions include 0.35 to 0.65wt% lecithin, and optimal compositions include 0.4 to 0.6 wt% lecithin.

### Water

Preferably the cone may further include a small amount of water. However, in order to keep the cone crispy during storage, it is preferred that the cone is substantially free of water.
By substantially free of water is meant, not more than 3%, more preferably not more than 2%, still more preferably not more than 1%, even more preferably not more than 0.5%, yet more preferably not more than 0.2%, or even less than 0.1 % by weight of water.

### Optional ingredients

### Caramel:

Preferably the cones may additionally include caramel. Caramel provides as a colouring agent when added to the cone. It is an amorphous, dark-brown material that has been produced by the carefully controlled heat treatment of saccharine materials such as dextrose, invert sugar, lactose, malt syrup, molasses, sucrose, starch hydrolysates and fractions thereof, etc. The heavy-bodied, almost black syrup contains colour components that impart the amber shade found in carbonated beverages, pharmaceutical and flavouring extracts, candies, soups, bakery products, and numerous other foods.

When present the cone preferably includes about 0.2 wt% of caramel.

### Salt:

The cone may also preferably include salt. Preferred salt is sodium chloride. When present the cone preferably includes about 0.2 wt% of salt.

### Process for making a coated ice-cream cone:

Process for making a coated ice-cream cone includes the steps of applying the coating composition disclosed in the first aspect to atleast one surface of cone and drying the coating. Preferably the coating composition is applied to the inner surface of the cone. The coating composition is applied preferably by spraying, immersion or painting.

The coated ice-cream cones are preferably packed immediately after the drying step and still more preferably the coated ice-cream cone are filled with ice-cream and then packing and storing under reduced temperature.

The coating composition of the present invention provides moisture barrier.

In accordance with a fourth aspect, the invention provides use of a composition of the first aspect for providing moisture barrier.

### EXAMPLES

### EXAMPLE 1

### Evaluation of shelf life of coated ice-cream cones:

An ice-cream cone made by either moulding or rolling process was taken and coated with coating compositions. Ice cream cones coated with coating composition according to the present invention and a comparative composition were prepared.

### Preparation of coating composition:

Coating composition according to a preferred embodiment of the present invention was prepared by grinding cocoa powder, granulated sugar, coconut oil and chitosan-laurate complex in quantities as provided in Table 1 in a councher. Similarly a comparative coating composition was prepared by grinding cocoa powder, granulated sugar, lecithin, vanillin, coconut oil in quantities as provided in Table 1 in a councher.

### Preparation of coated ice-cream cone:

3.5 to 4 grams of the prepared coating composition according to the present invention and comparative composition were sprayed to respective ice-cream cones by a compressed air spray gun at a temperature of about 40°C to 50°C. The coated ice-cream cones were allowed to dry. In the next step, the coated ice-cream cone were filled with vanilla ice-cream and stored at -20°C. The crispness of the cones under storage after 7 days and 14 days were measured and is given in Table 1.

**Table 1**

| Ingredients | Comparative Example -a | Example -1 |
|---|---|---|
| Cocoa powder | 12.3 | 12.0 |
| Granulated sugar | 43.9 | 43.0 |
| Lecithin | 0.5 | 0 |
| Vanillin (flavouring agent) | 0.1 | 0 |
| Coconut oil | 43.2 | 42.0 |
| Chitosan-laurate complex | 0 | 3.0 |
| Cone Crispness after 7 days | Crisp | Crisp |
| Cone Crispness after 14 days | Soggy | Crisp |

The data on Table 1 shows that ice-cream cones coated with the coating composition having chitosan-laurate complex according to the present invention (Example 1) provides longer shelf life duration as compared to cones coated with comparative composition (Comparative Example-a).

It should be understood that the specific forms of the invention herein illustrated and described are intended to be representative only, as certain changes may be made therein without departing from the clear teachings of the disclosure.

### EXAMPLE 2

### Process for making chitosan-soap complex:

To prepare chitosan-soap complex, solution of chitosan was prepared by dissolving 40 grams of chitosan and 40grams of citric acid in 2 litres of water at 80°C. A solution of fatty acid obtained from palm oil was prepared by dissolving 40 grams of the palm oil fatty acid and 21 gram of sodium bicarbonate in 1 litre of water at 80°C. The above two solutions were then mixed uniformly in a Silverson mixer (Silverson Machines, Chesham, Bucks, UK). The suspension obtained was filtered through a sieve and washed repeatedly with hot water. The chitosan-soap complex was dried at 50°C in hot air oven till the moisture level was 3%.

Although the invention has been described with reference to specific embodiments, it will be appreciated by those skilled in the art that the invention may be embodied in many other forms.

### EXAMPLE 3

### Evaluation of the crispiness of a cone coated with the preferred and comparative edible coating composition.

To prepare chitosan-soap complex, solution of chitosan was prepared by dissolving 40 grams of chitosan and 40 grams of citric acid in 2 litres of water at 80°C. A solution of fatty acid obtained from palm oil was prepared by dissolving 40 grams of the palm oil fatty acid and 21 gram of sodium bicarbonate in 1 litre of water at 80°C. The above two solutions were then mixed uniformly in a Silverson mixer (Silverson Machines, Chesham, Bucks, UK). The precipitate obtained was washed repeatedly with hot water until no foam or oil was seen in the washed liquor. The precipitate was separated and dried at 40°C in hot air oven till the moisture level was 1% to provide the chitosan-soap complex."

The preferred edible coating composition was prepared from chitosan-soap complex and coconut oil taken in a 1:1 ratio in a grinder and mixed for 8 hours. A 100wt% coconut oil was used as a comparative edible coating composition. Around 0.5g of the preferred edible coating composition was applied on a 1g wafer to obtain the cone coated with preferred edible coating composition (Ex-2). Around 0.5g of the comparative edible coating composition was applied to another wafer weighing 1 g to obtain the cone coated with comparative edible coating composition (Ex-b).

### Measurement of crispiness:

The wafer coated with the preferred composition and the wafer coated with the comparative composition was kept in two separate desiccators consisting of saturated NaCl solution for a period of 24 hours at 75% relative humidity.

The crispiness of the two cones after the 24 hour period was measured using a texture analyser (model TA-HDi, from Stable Micro System UK). The measurement was conducted at 25°C. The cone was placed sandwiched between a pair of plates of the texture analyser. The base plate was stationery and a weight of 5 kg was placed of the top plate. The top plate was moved towards the base plate at a speed of 0.1 mm/s. The movement of the top plate exerted a compression force on the cone. At a certain distance moved by the top plate the cone showed a first break. The force at which the cone showed the first break was measured and expressed in g force and provided in Table 2. The greater the force required to cause the first break the greater is the crispiness of the cone.

**Table 2**

| Cone coated with edible coating composition | Crispiness of cone (gf) |
|---|---|
| Ex-2 | 3086 |
| Ex-b | 1178 |

| | |
|---|---|
| From table 2 it is clear that a cone coated with the preferred composition (Ex-2) provides the cone with higher crispiness than a cone coated with the comparative composition (Ex-b) | |

## Claims

1. An edible coating composition comprising 30 to 55 wt% of an edible oil and **characterised in that** it comprises 0.5 to 50 wt% complex of chitosan and C₁₀-C₂₂ fatty acid soap.

2. An edible coating composition as claimed in claim1 comprising
(i) 5 to 65 wt% of a coating base;
(ii) 30 to 55 wt% of edible oil; and,
(iii) 0.5 to 5 wt% of the chitosan-soap complex.

3. An edible coating composition as claimed in claim 2, wherein the coating base comprises cocoa powder and sugar; and wherein the edible coating composition comprises:
(i) 2 to 40 wt% cocoa powder; and,
(ii) 15 to 60 wt% sugar;

4. An edible coating composition as claimed in claim 1 wherein said complex is a chitosan-laurate complex.

5. An edible coating composition as claimed in claim 1 wherein the edible oil is palm oil, coconut oil or any other edible oils.

6. An edible coating composition as claimed in claim 1 wherein the cocoa powder is natural or alkalized.

7. A coated food product having a cone comprising:
(i) 45 to 80 wt% wheat flour;
(ii) 15 to 50 wt% of sugar;
(iii) 1 to 30 wt% edible oil;
(iv) 0 to 3 wt% lecithin; and,
(v) 0 to 3 wt% water;
wherein at least one surface of the cone is coated with the composition of claim1 or 2 or 3; and wherein the total weight of the coated cone is from 2 to 20 grams, and wherein the ratio of the weight of the cone to the weight of the coating is 1:5 to 5:1.

8. A coated food product as claimed in claim 7 wherein the ratio of the weight of the cone to the weight of the coating is 1:1 to 5:1.

9. A method of manufacturing a coated food product as claimed in claim 7 comprising the steps of:
(i) applying to at least one surface of the cone the coating composition comprising 30 to 55 wt% edible oil and **characterised in that** it comprises 0.5 to 50wt% complex of chitosan and C₁₀-C₂₂ fatty acid soap.
(ii) drying the coating composition.

10. A method of manufacturing a coated food product as claimed in Claim 9 comprising the steps of:
(i) applying to at least one surface of the cone the coating composition comprising:
(a) 2 to 40 wt% cocoa powder;
(b) 30 to 55 wt% edible oil; and,
(c) 30 to 60 wt% sugar;
**characterised in that** it further contains 1 to 5 wt% complex of chitosan and C₁₀-C₂₂ fatty acid soap; and,
(ii) drying the coating composition.

11. A method of applying said coating composition to the inner surface of the cone by spraying, immersion or painting.

12. Use of a coating composition as claimed in claim 1 or claim 5 for providing moisture barrier.

## Patentansprüche

1. Essbare Beschichtungszusammensetzung, umfassend 30 bis 55 Gew.-% eines essbaren Öls und **dadurch gekennzeichnet, dass** sie 0,5 bis 50 Gew.-% Komplex von Chitosan und C₁₀-C₂₂-Fettsäureseife umfasst.

2. Essbare Beschichtungszusammensetzung, wie im Anspruch 1 beansprucht, umfassend
(i) 5 bis 65 Gew.-% einer Beschichtungsbasis,
(ii) 30 bis 55 Gew.-% essbares Öl und
(iii) 0,5 bis 5 Gew.-% des Chitosan-Seifen-Komplexes.

3. Essbare Beschichtungszusammensetzung, wie im Anspruch 2 beansprucht, wobei die Beschichtungsbasis Kakaopulver und Zucker umfasst und worin die essbare Beschichtungszusammensetzung
(i) 2 bis 40 Gew.-% Kakaopulver und
(ii) 15 bis 60 Gew.-% Zucker
umfasst.

4. Essbare Beschichtungszusammensetzung, wie im Anspruch 1 beansprucht, wobei der Komplex ein Chitosan-Laurat-Komplex ist.

5. Essbare Beschichtungszusammensetzung, wie im Anspruch 1 beansprucht, wobei das essbare Öl Palmöl, Kokosöl oder irgendwelche anderen essbaren Öle darstellt.

6. Essbare Beschichtungszusammensetzung, wie im Anspruch 1 beansprucht, wobei das Kakaopulver natürlich oder alkalisiert ist.

7. Beschichtetes Lebensmittelprodukt mit einem Kegel, umfassend:
(i) 45 bis 80 Gew.-% Weizenmehl,
(ii) 15 bis 50 Gew.-% Zucker,
(iii) 1 bis 30 Gew.-% essbares Öl,
(iv) 0 bis 3 Gew.-% Lecithin und
(v) 0 bis 3 Gew.-% Wasser,
wobei mindestens eine Oberfläche des Kegels mit der Zusammensetzung nach Anspruch 1 oder 2 oder 3 beschichtet ist und wobei das Gesamtgewicht des beschichteten Kegels 2 bis 20 Gramm beträgt und wobei das Verhältnis des Gewichts des Kegels zu dem Gewicht der Beschichtung 1:5 bis 5:1 beträgt.

8. Beschichtetes Lebensmittelprodukt, wie im Anspruch 7 beansprucht, wobei das Verhältnis des Gewichts des Kegels zu dem Gewicht der Beschichtung 1:1 bis 5:1 beträgt.

9. Verfahren zur Herstellung eines beschichteten Lebensmittelprodukts, wie im Anspruch 7 beansprucht, umfassend die Schritte:
(i) Aufbringen der Beschichtungszusammensetzung, umfassend 30 bis 55 Gew.-% essbares Öl und **dadurch gekennzeichnet, dass** sie 0,5 bis 50 Gew.-% Komplex von Chitosan und C₁₀-C₂₂-Fettsäureseife umfasst, auf mindestens eine Oberfläche des Kegels und
(ii) Trocknen der Beschichtungszusammensetzung.

10. Verfahren zur Herstellung eines beschichteten Lebensmittelproduktes, wie im Anspruch 9 beansprucht, umfassend die Schritte:
(i) Aufbringen der Beschichtungszusammensetzung, umfassend:
(a) 2 bis 40 Gew.-% Kakaopulver,
(b) 30 bis 55 Gew.-% essbares Öl und
(c) 30 bis 60 Gew.-% Zucker
auf mindestens eine Oberfläche des Kegels, **dadurch gekennzeichnet, dass** sie des Weiteren 1 bis 5 Gew.-% Komplex von Chitosan und C₁₀-C₂₂-Fettsäureseife enthält und
(ii) Trocknen der Beschichtungszusammensetzung.

11. Verfahren zum Aufbringen der Beschichtungszusammensetzung auf die innere Oberfläche des Kegels durch Sprühen, Eintauchen oder Bestreichen.

12. Verwendung einer Beschichtungszusammensetzung, wie im Anspruch 1 oder Anspruch 5 beansprucht, zur Bereitstellung einer Feuchtigkeitsbarriere.

## Revendications

1. Composition de revêtement comestible comprenant de 30 à 55 % en masse d'une huile comestible et **caractérisée en ce qu'**elle comprend de 0,5 à 50 % en masse de complexe de chitosane et d'un savon d'acide gras en C₁₀-C₂₂.

2. Composition de revêtement comestible selon la revendication 1 comprenant
(i) de 5 à 65 % en masse d'une base de revêtement ;
(ii) de 30 à 55 % en masse d'huile comestible ; et,
(ii) de 0,5 à 5 % en masse du complexe de chitosane-savon.

3. Composition de revêtement comestible selon la revendication 2, dans laquelle la base de revêtement comprend de la poudre de cacao et du sucre ; et dans laquelle la composition de revêtement comestible comprend :
(i) de 2 à 40 % en masse de poudre de cacao ; et,
(ii) de 15 à 60 % en masse de sucre.

4. Composition de revêtement comestible selon la revendication 1, dans laquelle ledit complexe est un complexe de chitosane-laurate.

5. Composition de revêtement comestible selon la revendication 1, dans laquelle l'huile comestible est l'huile de palme, l'huile de noix de coco ou d'autres huiles comestibles.

6. Composition de revêtement comestible selon la revendication 1, dans laquelle la poudre de cacao est naturelle ou alcalisée.

7. Produit d'aliment revêtu présentant un cône comprenant :
(i) de 45 à 80 % en masse de farine de blé ;
(ii) de 15 à 50 % en masse de sucre ;
(ii) de 1 à 30 % en masse d'huile comestible ;
(iv) de 0 à 3 % en masse de lécithine ; et,
(v) de 0 à 3 % en masse d'eau ;
dans lequel au moins une surface du cône est revêtue avec la composition selon la revendication 1 ou 2 ou 3 ; et dans lequel la masse totale du cône revêtu est de 2 à 20 grammes, et dans lequel le rapport de la masse du cône à la masse du revêtement est de 1:5 à 5:1.

8. Produit d'aliment revêtu selon la revendication 7, dans lequel le rapport de la masse du cône à la masse du revêtement est de 1:1 à 5:1.

9. Procédé de fabrication d'un produit d'aliment revêtu selon la revendication 7 comprenant les étapes de :
(i) application à au moins une surface du cône de la composition de revêtement comprenant de 30 à 55 % en masse d'huile comestible et **caractérisée en ce qu'**elle comprend de 0,5 à 50 % en masse de complexe de chitosane et de savon d'acide gras en C₁₀-C₂₂.
(ii) séchage de la composition de revêtement.

10. Procédé de fabrication d'un produit d'aliment revêtu selon la revendication 9 comprenant les étapes de :
(i) application à au moins une surface du cône de la composition de revêtement comprenant :
(a) de 2 à 40 % en masse de poudre de cacao ;
(b) de 30 à 55 % en masse d'huile comestible ; et
(c) de 30 à 60 % en masse de sucre ;
**caractérisée en ce qu'**elle comprend de plus de 1 à 5 % en masse de complexe de chitosane et de savon d'acide gras en C₁₀-C₂₂ ; et,
(ii) séchage de la composition de revêtement.

11. Procédé d'application de ladite composition de revêtement sur la surface interne du cône par pulvérisation, immersion ou peinture.

12. Utilisation d'une composition de revêtement selon la revendication 1 ou la revendication 5 pour fournir une barrière à l'humidité.
